# EUROPÄISCHE PATENTSCHRIFT

(11) **EP 2 499 028 B1**
(45) Veröffentlichungstag und Bekanntmachung des Hinweises auf die Patenterteilung: **08.04.2015**
(21) Anmeldenummer: 10779005.7
(22) Anmeldetag: 12.11.2010
(51) Int. Cl.: B60R 19/03, B60R 19/24, B60R 19/12, B60R 19/34, B60R 19/18

(54) **MODULARE STOSSFÄNGERANORDNUNG FÜR EIN FAHRZEUG**
MODULAR BUMPER ASSEMBLY FOR A VEHICLE
AGENCEMENT DE PARE-CHOCS MODULAIRE POUR UN VÉHICULE AUTOMOBILE

(30) Priorität: 12.11.2009 US 260428 P
(43) Veröffentlichungstag der Anmeldung: 19.09.2012
(73) Patentinhaber: MAGNA STEYR Fahrzeugtechnik AG & Co KG, 8041 Graz (AT)
(72) Erfinder: KRAMMER, Christoph, A-8530 Deuschlandsberg (AT); SCHERMAIER, Christian, A-8010 Graz (AT)
(74) Vertreter: Zangger, Bernd
(86) Internationale Anmeldenummer: PCT/EP2010/067419
(87) Internationale Veröffentlichungsnummer: WO 2011/058152

(56) Entgegenhaltungen:
- EP-A1- 1 293 389
- EP-A2- 1 063 135
- DE-B3-102005 060 609
- STAUSS O.: "Organoblech - Alternative zu Stahl und Aluminium" INDUSTIRANZEIGER, [Online] 2006, XP002621228 Gefunden im Internet: URL:http://www.industrieanzeiger.de/themen /-/article/12503/15971729/Organoblech-%E2% 80%93-Alternative-zu-Stahl-und-Aluminium/a rt_co_INSTANCE_0000/maximized/> [gefunden am 2011-02-09]
- SEONG SIK CHEON, JIN HO CHOI, DAI GIL LEE: "Development of the composite bumper beam for passanger cars" COMPOSITE STRUCTURES, Nr. 32, 1995, Seiten 491-499, XP002621227 DOI: 10.1016/0263-8223(95)00078-X

## Beschreibung

Die Erfindung betrifft eine modulare Stoßfängeranordnung für ein Fahrzeug sowie ein Verfahren zu deren Herstellung.

Stoßfängeranordnungen, wie sie an Kraftfahrzeugen verwendet werden, dienen der Absorption der im Falle eines Aufprallereignisses freiwerdenden Aufprallenergie. Bekannte Stoßfängeranordnungen umfassen einen Querträger, der an üblicherweise zwei Stellen mit der Karosseriestruktur des Fahrzeugs, bspw. den Fahrzeuglängsträgern, verbunden wird. Zwischen dem Querträger und der Karosseriestruktur können zusätzlich spezielle Deformationseiemente, sogenannte "Crashboxen", angeordnet sein. Dies kann durch gesetzliche Regelungen auch vorgeschrieben sein. Die Crashboxen vermögen eine große Aufprallenergie zu verzehren, wenn sie in ihrer Längsrichtung gestaucht werden.

Eine Aufgabe des Querträgers besteht darin, dass er sich bei einem Aufprallereignis deformiert und dadurch die freiwerdende Aufprallenergie verzehrt. Ferner soll der Querträger die Aufprallenergie auf die Crashboxen lenken. Der Querträger muss daher bestimmte, durch Simulationen berechnete Querschnittsdimensionen, Querschnittsgestaltungen und Wanddicken aufweisen, um diese Vorgaben zu erfüllen. Das hohe Energieabsorptionsvermögen vieler Stahl- und Aluminium-Legierungen, ihr duktiles Deformationsverhalten und ihre gute numerische Modellierbarkeit sind Gründe für den heute überwiegenden Einsatz von Metallen als Material für den Querträger.

Aus der EP 1 063 135 A2 ist eine nächstliegende Stoßstangenkonstruktion für Fahrzeuge bekannt, mit einer lang gestreckten Stange mit einander gegenüberliegenden Endabschnitten und einem Paar struktureller geformter Endstücke aus Polymermaterial, wobei die Endstücke an den einander gegenüberliegenden Endabschnitten befestigt sind und diese abstützen und eine Befestigungsstruktur aufweisen, die so konstruiert ist, dass sie die Stoßstangenkonstruktion an einem Fahrzeug-Rahmen sicher befestigt.

Aus dem Stand der Technik sind auch Querträger aus Kunststoff bekannt, die als Extrusionsprofil ausgebildet sind.

Nachteilig an den aus dem Stand der Technik bekannten Stoßfängeranordnungen ist, dass für nahezu jedes Automodell mit entsprechenden, modellspezifischen Fahrzeugproportionen eine neue Stoßfängeranordnung entwickelt werden muss. Ändert sich bspw. von Modell zu Modell die Breite der Längsträger der Karosseriestruktur oder auch nur der in Fahrzeuglängsrichtung gemessene Abstand der Einbauposition der Stoßfängeranordnung relativ zum Längsträger, erfordert dies die Entwicklung einer neuen Stoßfängeranordnung. Dies ist mit dem Nachteil hoher Investitions- und Entwicklungskosten verbunden.

Der vorliegenden Erfindung liegt daher die Aufgabe zugrunde, eine einfacher zu entwickelnde und einfacher herzustellende Stoßfängeranordnung anzugeben.

Bei einem erfindungsgemäßen Verfahren zur Herstellung einer Stoßfängeranordnung für ein Fahrzeug werden ein Querträger aus faserverstärktem Kunststoff und zwei Seitenteile aus Kunststoff erzeugt bzw. bereitestellt, wobei zur Herstellung der Seitenteile heißer und flüssiger Kunststoff verwendet wird. Es erfolgt die Ausbildung einer Schmelzverbindung zwischen jeweils einem Seitenteil und jeweils einem der beiden Enden des Querträgers während der Abkühlung der Schmelze des Seitenteils.

Nach einer bevorzugten Ausgestaltung der Erfindung werden die Seitenteile unter Verwendung von heißem und flüssigem Kunststoff, insbesondere durch ein Spritzgießverfahren, hergestellt. Dabei wird jeweils ein heißes und flüssiges Seitenteil an einem Ende des Querträgers angefügt, um während der Abkühlung des jeweiligen Seitenteils die Schmelzverbindung zwischen dem Seitenteil und dem Querträger auszubilden. Dabei wird der Querträger so im Spritzgießwerkzeug des Seitenteils positioniert, dass beim Schließen der Werkzeughälften eine Abdichtung zwischen dem Werkzeug und dem Querträger gewährleistet ist und sich nur jene Abschnitte des Querträgers innerhalb der Form befinden, welche mit heißer Schmelze benetzt werden sollen. Der restliche Teil des Querträgers verbleibt jedoch außerhalb des Werkzeuges.

An jedes heiße und flüssige Seitenteil kann in gleicher Weise eine, insbesondere aus einem glasfaserverstärkten Kunststoff hergestellte Crashbox angefügt werden, so dass während der Abkühlung des Seitenteils eine Schmelzverbindung zwischen dem jeweiligen Seitenteil und der daran angefügten Crashbox ausgebildet wird.

Ferner kann ein, bevorzugt plattenförmiges und/oder metallenes, Befestigungsteil zur Befestigung der Stoßfängeranordnung an einer Karosseriestruktur des Kraftfahrzeugs angeklebt werden.

Die erfindungsgemäße modulare Stoßfängeranordnung für ein Fahrzeug umfasst einen Querträger aus faserverstärktem Kunststoff, zwei Seitenteile aus Kunststoff, wobei an jedem der beiden Enden des Querträgers jeweils ein Seitenteil angeordnet oder anordenbar ist, und zwei Befestigungsteile zur Befestigung der Stoßfängeranordnung an einer Karosseriestruktur des Fahrzeugs, wobei jeweils ein Befestigungsteil an einem Seitenteil befestigt oder befestigbar ist.

Zwischen dem Querträger und jedem Seitenteil ist eine Schmelzverbindung ausgebildet, durch die der Querträger und das jeweilige Seitenteil unlösbar miteinander verbunden sind. Die Schmelzverbindung wird auf folgende Weise ausgebildet: Bei der Herstellung des Seitenteils mittels eines Spritzgießverfahrens liegt das Seitenteil zunächst im heißen und flüssigen Zustand vor. Noch vor der Erstarrung und Abkühlung werden das Seitenteil und der bspw. aus Organoblech bestehende Querträger unter Einwirkung des Spritzdruckes zusammengefügt, wodurch sich die Schmelzverbindung während der Abkühlung des Seitenteils ausbildet. Hierzu wird der Querträger so im Spritzgießwerkzeug des Seitenteils positioniert, dass beim Schließen der Werkzeughälften eine Abdichtung zwischen dem Werkzeug und dem Querträger gewährleistet ist und sich nur jene Abschnitte des Querträgers innerhalb der Form befinden, welche mit heißer Schmelze benetzt werden sollen. Der restliche Teil des Querträgers verbleibt außerhalb des Werkzeuges.

Durch die Schmelzverbindung können der Querträger und die beiden Seitenteile besonders fest miteinander verbunden werden, was die Bruchsicherheit der Stoßfängeranordnung, insbesondere bei einem besonders heftigen Aufprall, erhöht. Darüber hinaus gewährleistet die Schmelzverbindung ein minimales Gewicht der Stoßfängeranordnung, da keine Verbindungselemente wie Schrauben oder Nieten benötigt werden. Außerdem entfallen jene Flanschbereiche, die für Verbindungstechniken wie Schrauben oder Kleben benötigt würden.

Vorteilhaft an der erfindungsgemäßen Stoßfängeranordnung ist deren modularer Aufbau. Dadurch wird es möglich, die Stoßfängeranordnung einfacher und schneller an unterschiedliche Fahrzeugmodelle oder -typen anzupassen. Soll bspw. eine Stoßfängeranordnung für ein neues Fahrzeugmodell, insbesondere mit ähnlicher Standhöhe, ähnlicher Länge des vorderen Überhanges und ähnlicher Masse, entwickelt werden, so können aufgrund des modularen Aufbaus bspw. die Seitenteile und die Befestigungsteile von einer, für ein anderes Fahrzeugmodell bereits entwickelten erfindungsgemäßen Stoßfängeranordnung übernommen werden. Daher ist zur Entwicklung der Stoßfängeranordnung für das neue Fahrzeugmodell im Wesentlichen nur eine Anpassung des Querträgers erforderlich, insbesondere hinsichtlich seiner Länge und/oder seiner Form, wodurch der Entwicklungsaufwand verringert und die Entwicklungszeit verkürzt werden kann.

Bei der erfindungsgemäßen Stoßfängeranordnung sind sowohl der Querträger als auch die Seitenteile aus Kunststoffmaterialen ausgebildet. Dadurch kann gegenüber einer Stoßfängeränordnung mit einem metallenen Querträger eine Gewichtsreduktion erreicht werden, die sich bspw. günstig auf den Kraftstoffverbrauch und das Fahrverhalten des Fahrzeugs auswirkt. Zum Beispiel wird, bei Verwendung einer erfindungsgemäßen Stoßfängeranordnung im Frontbereich des Fahrzeugs, aufgrund der Gewichtsersparnis das auf die Vorderachse wirkende Gewicht reduziert, wodurch das Lenkverhalten verbessert wird und das Fahrverhalten agiler wirkt.

Das Befestigungsteil kann mittelbar oder unmittelbar am Seitenteil befestigt oder befestigbar sein, da bspw. eine Crashbox zwischen den beiden Teilen angeordnet sein kann.

Bevorzugt besteht der Querträger aus kohlefaserverstärktem Kunststoff und/oder aus fasermattenaufweisendem Material, insbesondere aus glasmattenverstärktem Thermoplast oder aus endlosfaserverstärktem Kunststoff, bevorzugt endlosfaserverstärkten Thermoplastplatten, wie etwa Organoblech oder PP-GM 40. Durch diese Materialien lässt sich ein Querträger realisieren, welcher ein geringeres Gewicht als ein vergleichbarer metallener Querträger aufweist, bei dem jedoch das Verhältnis zwischen Zugfestigkeit und Dichte höher ist als bei dem metallenen Querträger. Daher kann bei geringerem Gewicht ein im Vergleich zum metallenen Querträger ähnlich stabiler oder sogar noch stabilerer Querträger realsiert werden.

Bevorzugt weist der Querträger einen U-förmigen Querschnitt oder ein Hutprofil auf. Dadurch kann ein stabiler, hochbelastbarer, zug- und druckfester Querträger bei geringem Gewicht realisiert werden, der besonders gut sowohl hohen Stoß- als auch hohen Biegebelastungen Stand halten kann.

Insbesondere kann die Länge des Querträgers derart gewählt oder vorgegeben sein, dass, in der Einbauposition der Stoßfängeranordnung am Fahrzeug und nach der Anordnung der Seitenteile an den Enden des Querträgers, sich der Querträger und die beiden Seitenteile derart über die Fahrzeugbreite erstrecken, dass die Stoßfängeranordnung mittels der Befestigungsteile an Längsträgern der Karosseriestruktur befestigbar ist. Die Breite der Stoßfängeranordnung, gemessen quer zur Fahrzeuglängsrichtung, kann somit durch die Länge des Querträgers eingestellt werden, so dass durch Anpassung der Querträgerlänge die Stoßfängeranordnung für den Einbau in einem bestimmten Fahrzeugtyp, insbesondere für den Anbau an die Karosseriestruktur des Fahrzeugtyps, angepasst werden kann.

Nach einer bevorzugten Weiterbildung der Erfindung ist der Querträger in Form eines Bogens ausgebildet, dessen Biegung derart gewählt ist, insbesondere entsprechend der Kontur einer inneren Oberfläche einer Fahrzeugaußenhaut, dass der Querträger in der Einbauposition der Stoßfängeranordnung in einem vorgegebenen Abstand zur Fahrzeugaußenhaut verläuft, insbesondere direkt unterhalb der Fahrzeugaußenhaut und entlang der innerer Oberfläche. Dadurch kann der für ein Kraftfahrzeug im Front- oder Heckbereich vorgesehene Deformationsraum optimal ausgenutzt werden. Ferner wird im Falle eines Aufpralls dem Eindringen eines Kollisionspartners frühzeitig entgegengewirkt, so dass die Gefahr für Beschädigungen von bspw. Antriebs- oder Nebenaggregaten verringert wird. Außerdem kann auf diese Weise sichergestellt werden, dass eine Abschlepp-Vorrichtung, wie etwa eine Anschlusseinrichtung für eine Abschleppöse, die am Querträger ausgebildet sein kann, in unmittelbarer Nähe, insbesondere direkt unterhalb der Fahrzeugaußenhaut sitzt.

Die Seitenteile sind bevorzugt spritzgegossen. Auf diese Weise können die Seitenteile schnell, einfach und kostengünstig hergestellt werden.

Die Seitenteile können aus einem Polypropylen aufweisenden Material, beispielsweise aus PP-GF, ausgebildet sein. Bevorzugt sind die Seitenteile aus einem Material ausgebildet, welches Polypropylen und einen mindestens 25-%igen, bevorzugt mindestens 30-%igen, Glasfaseranteil aufweist. Dadurch können stabile und leichte Seitenteile in einfacher Weise durch ein Spritzgießverfahren hergestellt werden.

Nach einer bevorzugten Ausgestaltung der Erfindung ist jedes Seitenteil mit dem Querträger unlösbar verbunden. Auf diese Weise kann eine besonders feste und dauerhafte Verbindung zwischen dem Querträger und dem jeweiligen Seitenteil zu geringen Kosten realisiert werden.

Nach einer Weiterbildung der Erfindung ist zwischen jeweils einem Seitenteil und einem Befestigungsteil eine Crashbox angeordnet oder anordnenbar. Eine an sich bekannte Crashbox kann eine große Aufprallenergie verzehren, wenn sie in ihrer Längsrichtung gestaucht wird. Dabei benötigt sie für eine bestimmte zu verzehrende Energie eine relativ geringe Längserstreckung und sie erfordert einen relativ kleinen Materialeinsatz.

Bevorzugt sind das Seitenteil, die Crashbox und das Befestigungsteil in der Einbauposition und in Fahrzeuglängsrichtung gesehen hintereinander angeordnet. Dadurch befinden sich die Crashboxen in Fahrzeuglängsrichtung gesehen zwischen dem Querträger bzw. den daran angeordneten Seitenteilen und den Längsträgern der Karosseriestruktur, an denen normalerweise die Stoßfängeranordnung mittels der Befestigungsteile befestigt ist. Somit wird die im Falle eines Aufpralls freiwerdende Energie zunächst durch die Crashboxen absorbiert bevor die Karosseriestruktur beeinträchtig wird.

Die Länge der an den Seitenteilen angeordneten Crashboxen kann, bezogen auf die Fahrzeuglängsrichtung, so gewählt werden oder so vorgegeben sein, dass sich in der Einbauposition der Stoßfängeranordnung der Querträger in einem vorgegebenen Abstand zur Fahrzeugaußenhaut befindet. Die Crashboxen dienen daher als Distanzstücke, mittels denen die Stoßfängeranordnung an einen vorgegebenen Abstand zwischen den Längsträgern der Karosseriestruktur und der Fahrzeugaußenhaut angepasst werden kann. Dadurch kann die Stoßfängeranordnung so ausgelegt werden, dass sich der Querträger in der Einbauposition direkt unterhalb der Fahrzeugaußenhaut befindet, was die vorstehend bereits hinsichtlich einer möglichen bogenförmigen Ausgestaltung des Querträgers angegebenen Vorteile bewirkt.

Nach einer Weiterbildung der Erfindung besteht jede Crashbox aus einem faserverstärkten Kunststoff, insbesondere aus kohlefaserverstärktem Kunststoff und/oder glasmattenverstärktem Thermoplast und/oder endlosfaserverstärkten Thermoplastplatten, wie etwa Organoblech. Dadurch kann eine voll funktionsfähige Crashbox mit guten Energieabsorptionseigenschaften bei geringem Gewicht realisiert werden.

Jedes Seitenteil kann mit der daran angeordneten Crashbox unlösbar verbunden sein, insbesondere durch eine zwischen der Crashbox und dem Seitenteil ausgebildete Schmelzverbindung. Auf diese Weise kann das jeweilige Seitenteil besonders fest mit der Crashbox verbunden werden, so dass im Falle eines starken Aufpralls die Gefahr eines Bruchs am Übergang zwischen Crashbox und Seitenteil minimiert wird. Darüber hinaus gewährleistet die Schmelzverbindung ein minimales Gewicht der Stoßfängeranordnung, da keine Verbindungselemente wie Schrauben oder Nieten benötigt werden. Außerdem entfallen jene Flanschbereiche, die für Verbindungstechniken wie Schrauben oder Kleben benötigt würden.

Vorteilhaft wird die Crashbox an das bei der Herstellung mittels eines Spritzgießverfahrens heiße und flüssige Seitenteil angeordnet, so dass die Schmelzverbindung während des Abkühlens der heißen Schmelze des Seitenteils ausgebildet wird. Hierzu muss die Crashbox so im Spritzgießwerkzeug positioniert werden, dass beim Schließen der Werkzeughälften eine Abdichtung zwischen dem Werkzeug und der Crashbox gewährleistet ist und sich nur jene Abschnitte der Crashbox innerhalb der Form befinden, welche mit heißer Schmelze benetzt werden sollen. Der restliche Teil der Crashbox verbleibt außerhalb des Werkzeuges.

Nach einer bevorzugten Ausgestaltung der Erfindung sind der Querträger und/oder die Crashboxen aus fasermattenaufweisendem Material ausgebildet, insbesondere aus endlosfaserverstärkten Thermoplastplatten, wie etwa Organoblech, und die Seitenteile sind aus einem Kunststoffmaterial ausgebildet, bevorzugt aus einem Polypropylen aufweisenden Material, besonders bevorzugt aus PP-GF. Durch das zum Einsatz kommende Material sind der Querträger bzw. die Crashboxen nur begrenzt formbar. Durch die Verwendung der nicht aus fasermatten bestehenden Seitenteile ist es jedoch möglich, die Stoßfängeranordnung in eine gewünschte oder vorgegebenen Gestalt zu bringen, insbesondere indem der Querträger und die Crashboxen, wie vorstehend beschrieben, in geeigneter Weise mit den Seitenteilen verbunden werden. Würde man bei der Stoßfängeranordnung auch die Seitenteile aus Fasermatten ausbilden, oder sogar die Stoßfängeranordnung einteilig aus Fasermatten ausbilden, wäre es aufgrund der begrenzten Verformbarkeit der Fasermatten schwieriger, die Stoßfängeranordnung in die gewünschte oder vorgegebene Gestalt zu bringen. Zudem wäre dies mit hohen Werkzeugkosten verbunden. Durch den modularen Aufbau der erfindungsgemäßen Stoßfängeranordnung, bei welcher sowohl der Querträger als auch die Crashboxen leicht in der Länge anpassbar sind, und bei welcher die Seitenteile Standardteile darstellen, die in verschiedenen, für unterschiedliche Fahrzeugtypen konzipierten Stoßfängeranordnungen zum Einsatz kommen können und somit in ihren Herstellungs- und Werkzeugkosten günstig sind, kann jedoch eine kompakte, kostengünstig herstellbare und einfach an eine vorgegebene Gestalt anpassbare Stoßfängeranordnung realisiert werden.

Nach einer bevorzugten Ausgestaltung der Erfindung ist jedes Befestigungsteil plattenförmig ausgebildet. Eine derartige Befestigungsplatte kann auf einfache Weise, zum Beispiel mittels eines Stanzvorganges, hergestellt werden.

Bevorzugt besteht jedes Befestigungsteil aus einen Metall, insbesondere aus Aluminium oder Stahl.

Jedes Befestigungsteil kann Bohrungen aufweisen, um das Befestigungsteil mittels Befestigungsmitteln, wie etwa Schrauben oder Nieten, an der Karosseriestruktur zu befestigen, insbesondere an einem Längsträger der Karosseriestruktur.

Bevorzugt ist jedes Befestigungsteil in der Einbauposition der Stoßfängeranordnung und in Fahrzeuglängsrichtung gesehen hinter dem jeweiligen Seitenteil und, gegebenenfalls hinter einer, zwischen dem Seitenteil und dem Befestigungsteil angeordneten Crashbox angeordnet. Dadurch wird sichergestellt, dass sich die Crashbox in Fahrzeuglängsrichtung betrachtet zwischen dem Querträger bzw. den Seitenteilen und den Längsträgern der Karosseriestruktur befindet, so dass im Falle eines Aufpralls die freiwerdende Energie, vor einer Beeinträchtigung der Karosseriestruktur, von den Crashboxen absorbiert wird.

Jedes Befestigungsteil kann an dem jeweiligen Seitenteil oder an einer zwischen dem Befestigungsteil und dem Seitenteil angeordneten Crashbox angeklebt sein, so dass diese Teile auf eine besonders kostengünstige Art und Weise miteinander fest verbunden werden. Aufgrund des geringen Gewichts des Klebstoffes wird zudem das Gewicht der Stoßfängeranordnung gering gehalten.

An dem Querträger kann eine Anschlusseinrichtung für eine Abschleppöse ausgebildet sein, insbesondere in Form eines Schraubgewindes.

Nach einer Weiterbildung der Erfindung weist die Stoßfängeranordnung einen weiteren, zweiten Querträger auf, der in der Einbauposition unterhalb und beabstandet zum ersten Querträger angeordnet ist, wobei an den beiden Enden des zweiten Querträgers jeweils ein Seitenteil angeordnet ist, wobei jedes Befestigungsteil in Form einer länglichen Platte ausgebildet ist, die sich in der Einbauposition in vertikaler Richtung erstreckt und die sowohl mit einem Seitenteil des ersten, oberen Querträgers als auch einem darunterliegenden Seitenteil des zweiten, unteren Querträgers, insbesondere über jeweils eine Crashbox, verbunden ist. Eine derartig ausgebildete Stoßfängeranordnung mit zwei übereinander angeordneten und voneinander beabstandeten Querträgern lässt sich als ein Bauteil an einer Karosseriestruktur montieren, was den Montageaufwand sowie die hierfür benötigte Zeit vermindert.

Die Erfindung wird nachfolgend beispielhaft anhand der beigefügten Zeichnungen beschrieben. Es zeigen, jeweils in schematischer Darstellung,
- Fig. 1: eine perspektivische Ansicht einer erfindungsgemäßen Stoßfängeranordnung,
- Fig. 2: eine Illustration, wie die Tiefe einer Stoßfängeranordnung, bezogen auf die Fahrzeuglängsrichtung, durch den Einsatz von Crashboxen angepasst werden kann,
- Fig. 3: eine Illustration, wie durch Änderung der Bogenform eines Querträgers eine Anpassung der Stoßfängeranordnung, insbesondere an eine von einer Fahrzeugauβenhaut vorgegebenen Form, erfolgen kann, und
- Fig. 4: eine Illustration, wie die Breite der in Fig. 1 gezeigten Stoßfängeranordnung durch Anpassung der Länge der Querträger an eine von einem Fahrzeug vorgegebene Breite angepasst werden kann.

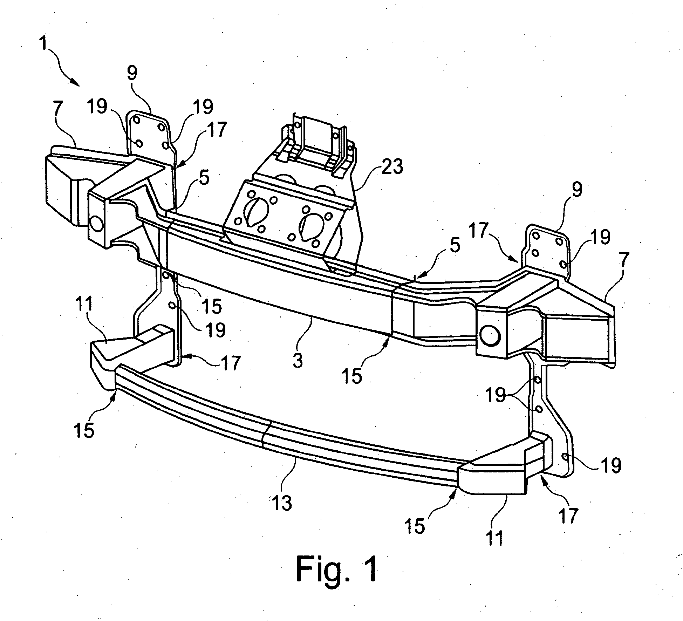

Die in Fig. 1 dargestellte Stoßfängeranordnung 1 umfasst einen oberen Querträger 3 aus faserverstärktem Kunststoff. An jedem Ende 5 des Querträgers 3 ist jeweils ein Seitenteil 7 angeordnet. An jedem Seitenteil 7 ist ein plattenartig ausgebildetes Befestigungsteil 9 befestigt. Über die Befestigungsteile 9 kann die Stoßfängeranordnung 1 an der Karosseriestruktur im Front- oder Heckbereich eines Fahrzeugs, insbesondere an Längsträgern der Karosseriestruktur, befestigt werden.

Der obere Querträger 3 erstreckt sich zusammen mit den seitlich daran angeordneten Seitenteilen 7 in der Einbauposition der Stoßfängeranordnung 1 in horizontaler Richtung und quer zur Fahrzeuglängsrichtung. Die Befestigungsteile 9 sind länglich ausgebildet und erstrecken sich in der Einbauposition in vertikaler Richtung nach unten. Bei der dargestellten Stoßfängeranordnung 1 ist im unteren Bereich jedes Befestigungsteils 9 jeweils ein unteres Seitenteil 11 befestigt, welches mit einem Ende eines unteren Querträgers 13 verbunden ist. Der untere Teil der Stoßfängeranordnung 1, bestehend aus dem unteren Querträger 13 und den seitlich daran angeordneten Seitenteilen 11, ist somit durch die Befestigungsteile 9 mit dem oberen Teil der Stoßfängeranordnung 1, bestehend aus dem oberen Querträger 3 und den seitlich daran angeordneten oberen Seitenteilen 7, verbunden. Dadurch kann die Stoßfängeranordnung 1 als ein Bauteil durch Befestigung der Befestigungsteile 9 an den Längsträgern der Karosseriestruktur am Fahrzeug montiert werden, was die Montage der Stoßfängeranordnung 1 erleichtert.

Die Querträger 3, 13 weisen einen hutförmigen Querschnitt auf und sind in der Einbauposition so angeordnet, dass die "Hutöffnung" dem Fahrzeug zugewandt ist. Die Querträger 3, 13 bestehen aus einem faserverstärkten Kunststoff, wie etwa Organoblech. Dadurch, sowie durch die Form und die Anordnung der Querträger 3, 13 sind diese mechanisch hoch belastbar und im Vergleich zu einem metallenen Querträger leichter.

Die Seitenteile 7, 11 bestehen aus einem Polypropylen aufweisenden Material, wie etwa PP-GF, und sind spritzgegossen. Dabei wurde jedes Seitenteil 7, 11 bei dessen Herstellung im noch heißen und flüssigen Zustand an dem jeweiligen Querträger 3, 13 angeordnet, sodass sich zwischen dem Querträger 3, 13 und dem jeweiligen Seitenteil 7, 11 bei der Abkühlung des Seitenteils eine Schmelzverbindung 15 ausgebildet hat. Dadurch wurden die Querträger 3, 13 mit den jeweiligen Seitenteilen 7, 11 in besonders fester Weise unlösbar miteinander verbunden, wodurch die Gefahr eines Bruchs der Stoßfängeranordnung, insbesondere bei einem relativ starken Aufprall, verringert werden kann.

Die Befestigungsteile 9 wurden unter Ausbildung einer Klebeverbindung 17 an dem jeweiligen oberen Seitenteil 7 und dem jeweiligen unteren Seitenteil 11 angeklebt. Dadurch wird eine feste Verbindung zwischen dem jeweiligen Befestigungsteil 9 und den Seitenteilen 7, 11 erreicht, wobei wegen des geringen Gewichts des Klebestoffs das Gewicht der Stoßfängeranordnung nicht merklich erhöht wurde.

Wie aus der Fig. 1 ersichtlich ist, weist jedes Befestigungsteil 9 mehrere Bohrungen 19 auf. Damit ist es möglich, die Befestigungsteile 9 und somit die Stoßfängeranordnung 1 mittels Schrauben oder Nieten an der Karosseriestruktur zu befestigen.

Oberhalb des oberen Querträgers 3 kann mittig ein Niederhalter 23 vorgesehen sein, der am oberen Querträger 3 und an der nicht gezeigten Karosseriestruktur befestigt wird und im Falle eines starken Aufpralls gewährleistet, dass der obere Querträger 3 nicht nach oben weggedrückt werden kann.

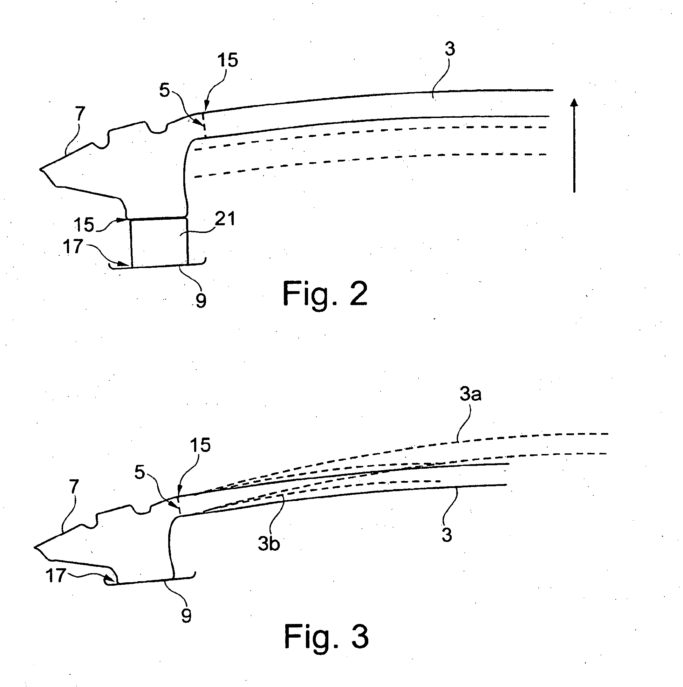

Bei der in der Fig. 2 in einer Draufsicht teilweise dargestellten Stoßfängeranordnung ist zwischen dem Seitenteil 7 und dem Befestigungsteil 9 eine Crashbox 21 angeordnet. Dabei sind das Seitenteil 7, die Crashbox 21 und das Befestigungsteil 9, bezogen auf die durch den Pfeil angegebene Fahrzeuglängsrichtung, hintereinander angeordnet. In Fig. 2 ist angedeutet, dass der Querträger 3 um die Länge der Crashbox 21, gemessen in Fahrzeuglängsrichtung, gegenüber einer Stoßfängeranordnung ohne Crashboxen versetzt ist, vgl. den gestrichelt angedeuteten Querträger. Durch die Crashbox 21 kann somit, je nach Länge der Crashbox 21, die Lage des Querträgers 3 bezüglich der Fahrzeuglängsrichtung variiert und an unterschiedliche Fahrzeugmodelle bzw. -typen angepasst werden, insbesondere an den für ein bestimmtes Fahrzeugmodell vorgegebenen Abstand zwischen den Längsträgern der Karosseriestruktur und der vor den Querträgern liegenden Fahrzeugaußenhaut. Durch Anpassung der Länge der Crashbox 21 ist es somit möglich, den Querträger 3 möglichst nahe an die innere Oberfläche der Fahrzeugaußenhaut zu rücken, um im Falle eines Aufpralls den Weg zwischen der Außenhaut und dem Querträger, der die beim Aufprall freiwerdende Energie absorbieren bzw. aufnehmen soll, möglichst gering zu halten.

Die Crashbox 21 ist aus einem faserverstärkten Kunststoff ausgebildet, wodurch einerseits die Funktionsfähigkeit der Crashbox als Energieabsorber nicht beeinträchtigt wird, aber andererseits das Gewicht der Stoßfängeranordnung 1 gering gehalten werden kann. Das Befestigungsteil 9 ist unter Ausbildung einer Klebeverbindung 17 an die Crashbox 21 geklebt. In entsprechender Weise wie der Querträger 3 wurde auch die Crashbox 21 an dem nach dem Spritzgießen noch heißen und flüssigen Seitenteil 7 angeordnet, sodass sich während der Abkühlung des Seitenteils 7 eine Schmelzverbindung 15 zwischen dem Seitenteil 7 und der Crashbox 21 ausgebildet hat.

Der Vollständigkeit halber sei erwähnt, dass Distanzstücke anstelle der Crashboxen 21 verwendet werden können, um eine Anpassung der Position des Querträgers 3, bezogen auf die Fahrzeuglängsrichtung, zu bewerkstelligen, insbesondere dann, wenn in funktionaler Hinsicht oder aus Kostengründen auf Crashboxen 21 verzichtet werden soll.

Gemäß Fig. 3 können unterschiedlich geformte Querträger 3, 3a, 3b an einem Seitenteil 7 angeordnet werden. Die Querträger 3, 3a, 3b sind jeweils bogenförmig ausgebildet und weisen verschiedene Biegungen auf. Durch geeignete Wahl der Bogenform bzw. der Biegung kann ein Querträger 3, 3a, 3b an die Kontur einer inneren Oberfläche einer nicht dargestellten Fahrzeugaußenhaut angepasst werden. Der Querträger 3, 3a, 3b kann insbesondere so ausgebildet werden, dass dieser in der Einbauposition der Stoßfängeranordnung im Wesentlichen "parallel" zur inneren Oberfläche der Fahrzeugaußenhaut verläuft. Die modulare Stoßfängeranordnung kann demnach unter Beibehaltung der Seitenteile 7, der Befestigungsteile 9 und gegebenenfalls der Crashboxen 21 durch Anpassung der Form des Querträgers an einen bestimmten Fahrzeugtyp angepasst werden.

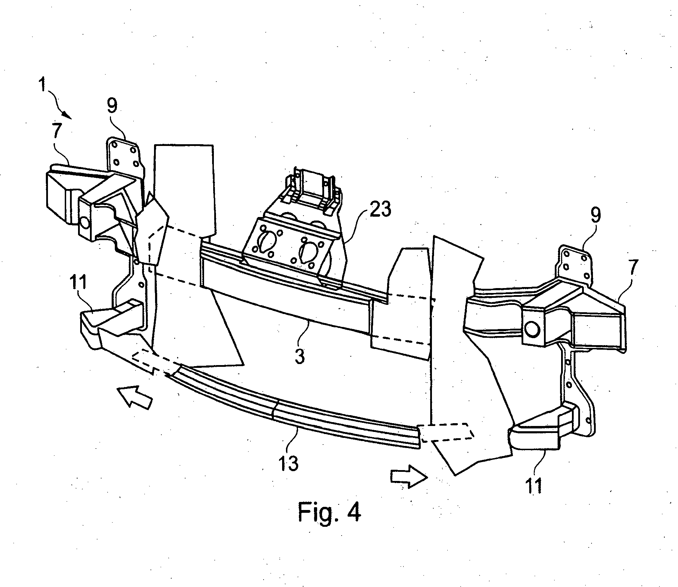

Wie ferner aus Fig. 4 ersichtlich ist, kann die quer zur Fahrzeuglängsrichtung gemessene Breite der Stoßfängeranordnung 1 durch Anpassung der Länge der Querträger 3, 13 an die von einem Fahrzeugtyp vorgegebene Breite zur Befestigung der Befestigungsteile 9 bspw. an den nicht dargestellten Längsträgern der Karosseriestruktur angepasst werden.

An der modular aufgebauten Stoßfängeranordnung 1 ist daher vorteilhaft, dass durch Anpassung der Form und/oder der Länge der Querträger 3, 13 und gegebenenfalls durch Anpassung der Länge der Crashboxen 21 die Stoßfängeranordnung 1 für den Einsatz in einem bestimmten Fahrzeugtyp ausgelegt werden kann. Die Seitenteile 7, 11 und/oder die Befestigungsteile 9 müssen jedoch nicht geändert werden, sondern können von einer für einen anderen Fahrzeugtyp konzipierten Stoßfängeranordnung übernommen werden. Dadurch können der Entwicklungsaufwand und die Entwicklungszeit verringert werden. Außerdem müssen keine neuen Werkzeuge und/oder Formen zur Herstellung der bevorzugt spritzgegossenen Seitenteile 7, 11 bereitgestellt werden.

### Bezugszeichenliste

- 1: Stoßfängeranordnung
- 3, 3a, 3b: oberer Querträger
- 5: Ende der Stoßfängeranordnung
- 7: oberes Seitenteil
- 9: Befestigungsteil
- 11: unteres Seitenteil
- 13: unterer Querträger
- 15: Schmelzverbindung
- 17: Klebeverbindung
- 19: Bohrungen
- 21: Crashbox
- 23: Niederhalter

## Patentansprüche

1. Verfahren zur Herstellung einer Stoßfängeranordnung (1) für ein Fahrzeug, mit den Schritten:
- Erzeugung eines Querträgers (3) aus faserverstärktem Kunststoff,
- Erzeugung von zwei Seitenteilen (7) unter Verwendung von heißem und flüssigem Kunststoff,
- Ausbildung einer Schmelzverbindung (15) zwischen jeweils einem Seitenteil (7) und einem der beiden Enden (5) des Querträgers (3) während der Abkühlung der heißen Schmelze des jeweiligen Seitenteils (7).

2. Verfahren nach Anspruch 1,
**dadurch gekennzeichnet, dass**
die Seitenteile (7) unter Verwendung von heißem und flüssigem Kunststoff spritzgegossen werden und jeweils ein heißes und flüssiges Seitenteil (7) an einem Ende (5) des Querträgers (3) angeordnet wird, um während der Abkühlung des jeweiligen Seitenteils (7) die Schmelzverbindung (15) zwischen dem Seitenteil (7) und dem Querträger (3) auszubilden.

3. Verfahren nach Anspruch 2,
**dadurch gekennzeichnet, dass**
an jedes heiße und flüssige Seitenteil (7) eine, insbesondere aus einem glasfaserverstärkten Kunststoff hergestellte, Crashbox (21) angefügt wird, um während der Abkühlung des Seitenteils (7) eine Schmelzverbindung (15) zwischen dem Seitenteil (7) und der Crashbox (21) auszubilden.

4. Verfahren nach Anspruch 3,
**dadurch gekennzeichnet, dass**
ein, insbesondere plattenförmiges und/oder metallenes, Befestigungsteil (9) zur Befestigung der Stoßfängeranordnung (1) an einer Karosseriestruktur des Fahrzeugs an der Crashbox (21) angeklebt wird.

5. Modulare Stoßfängeranordnung für ein Fahrzeug, umfassend einen Querträger (3) aus faserverstärktem Kunststoff, zwei Seitenteile (7) aus Kunststoff, wobei an jedem der beiden Enden (5) des Querträgers (3) jeweils ein Seitenteil (7) angeordnet ist, und zwei Befestigungsteile (9) zur Befestigung der Stoßfängeranordnung (1) an einer Karosseriestruktur des Fahrzeugs, wobei jeweils ein Befestigungsteil (9) an einem Seitenteil (7) befestigt oder befestigbar ist, **dadurch gekennzeichnet, dass**
zwischen dem Querträger (3) und jedem Seitenteil (7) eine Schmelzverbindung (15) ausgebildet ist, durch die der Querträger (3) und das jeweilige Seitenteil (7) unlösbar miteinander verbunden sind, wobei die Schmelzverbindung bei der Herstellung des Seitenteils (7) mittels eines Spritzgießverfahrens während der Abkühlung der heiβen Schmelze des Seitenteils (7) ausgebildet worden ist.

6. Stoßfängeranordnung nach Anspruch 5,
**dadurch gekennzeichnet,**
**dass** der Querträger (3) aus kohlefaserverstärktem Kunststoff und/der aus fasermattenaufweisendem Material besteht, insbesondere aus glasmattenverstärktem Thermoplast oder aus endlosfaserverstärktem Kunststoff, bevorzugt aus endlosfaserverstärkten Thermoplastplatten, wie etwa Organoblech oder PP-GM40, und/oder dass der Querträger (3) einen U-förmigen Querschnitt oder ein Hutprofil aufweist.

7. Stoßfängeranordnung nach Anspruch 5 oder 6,
**dadurch gekennzeichnet, dass**
die Länge des Querträgers (3) derart gewählt ist, dass, in der Einbauposition der Stoßfängeranordnung (1) am Fahrzeug und nach Anordnung der Seitenteile (7) an den Enden (5) des Querträgers (3), sich der Querträger (3) und die beiden Seitenteile (7) derart über die Fahrzeugbreite erstrecken, dass die Stoßfängeranordnung (1) mittels der Befestigungsteile (9) an Längsträgern der Karosseriestruktur befestigbar ist.

8. Stoßfängeranordnung nach zumindest einem der Ansprüche 5 bis 7,
**dadurch gekennzeichnet, dass**
der Querträger (3, 3a, 3b) in Form eines Bogens ausgebildet ist, dessen Biegung derart gewählt ist, insbesondere entsprechend der Kontur einer inneren Oberfläche der Fahrzeugaußenhaut, dass der Querträger (3, 3a, 3b) in der Einbauposition der Stoßfängeranordnung (1) in einem vorgegebenen Abstand zur Fahrzeugaußenhaut verläuft.

9. Stoßfängeranordnung nach zumindest einem der Ansprüche 5 bis 8,
**dadurch gekennzeichnet,**
**dass** die Seitenteile (7) spritzgegossen sind, und/oder dass die Seitenteile (7) aus einem Polypropylen aufweisenden Material, beispielsweise aus PP-GF, ausgebildet sind, insbesondere aus einem Material, welches Polypropylen und einen mindestens 25-prozentigen, bevorzugt mindestens 30-prozentigen, Glasfaseranteil aufweist.

10. Stoßfängeranordnung nach zumindest einem der Ansprüche 5 bis 9,
**dadurch gekennzeichnet, dass**
eine Crashbox (21) zwischen jeweils einem Seitenteil (7) und einem Befestigungsteil (9) angeordnet oder anordenbar ist, wobei, bevorzugt, das Seitenteil (7), die Crashbox (21) und das Befestigungsteil (9) in der Einbauposition und in Fahrzeuglängsrichtung gesehen hintereinander angeordnet sind, und dass, ferner bevorzugt, die Länge der Crashbox (21), bezogen auf die Fahrzeuglängsrichtung, derart gewählt ist, dass der Querträger (3) in der Einbauposition einen vorgegebenen Abstand zur Fahrzeugaußenhaut einnimmt.

11. Stoßfängeranordnung nach Anspruch 10,
**dadurch gekennzeichnet, dass**
jede Crashbox (21) aus einem faserverstärkten Kunststoff besteht, insbesondere aus kohlefaserverstärktem Kunststoff und/oder aus fasermattenaufweisendem Material, bevorzugt aus glasmattenverstärktem Thermoplast und/oder endlosfaserverstärkten Thermoplastplatten, wie etwa Organoblech.

12. Stoßfängeranordnung nach Anspruch 10 oder 11,
**dadurch gekennzeichnet, dass**
jedes Seitenteil (7) mit der daran angeordneten Crashbox (21) unlösbar verbunden ist, insbesondere dadurch, dass zwischen der Crashbox (21) und dem Seitenteil (7) eine sich bei der Abkühlung der heißen Schmelze des spritzgegossenen Seitenteils (7) ergebende Schmelzverbindung (15) ausgebildet ist.

13. Stoßfängeranordnung nach zumindest einem der Ansprüche 5 bis 12,
**dadurch gekennzeichnet, dass**
jedes Befestigungsteil (9) plattenförmig ausgebildet ist und/oder dass jedes Befestigungsteil (9) aus einem Metall, insbesondere aus Aluminium oder Stahl, besteht und/oder
dass jedes Befestigungsteil (9) Bohrungen aufweist, um das Befestigungsteil (9) mittels Befestigungsmitteln, wie etwa Schrauben oder Nieten, an der Karosseriestruktur, insbesondere an einem Längsträger der Karosseriestruktur, zu befestigen, und/oder dass jedes Befestigungsteil (9) in der Einbauposition der Stoßfängeranordnung (1) und in Fahrzeuglängsrichtung gesehen hinter dem jeweiligen Seitenteil (7) und, gegebenenfalls hinter einer, zwischen dem Seitenteil (7) und dem Befestigungsteil (9) angeordneten Crashbox (21) angeordnet ist.

14. Stoßfängeranordnung nach zumindest einem der Ansprüche 5 bis 13,
**dadurch gekennzeichnet, dass**
jedes Befestigungsteil (9) an dem jeweiligen Seitenteil (7) oder an einer zwischen dem Befestigungsteil (9) und dem Seitenteil (7) angeordneten Crashbox (21) angeklebt ist.

15. Stoßfängeranordnung nach zumindest einem der Ansprüche 5 bis 14,
**dadurch gekennzeichnet, dass**
an dem Querträger (3) eine Anschlusseinrichtung für eine Abschleppöse ausgebildet ist, insbesondere in Form eines Schraubgewindes.

16. Stoßfängeranordnung nach zumindest einem der Ansprüche 5 bis 15,
**dadurch gekennzeichnet, dass**
die Stoßfängeranordnung (1) einen weiteren, zweiten Querträger (13) aufweist, der in der Einbauposition unterhalb und beabstandet zum ersten Querträger (3) angeordnet ist, wobei an den beiden Enden des zweiten Querträgers (13) jeweils ein Seitenteil (11) angeordnet ist, wobei jedes Befestigungsteil (9) in Form einer länglichen Platte ausgebildet ist, die sich in der Einbauposition in vertikaler Richtung erstreckt und die sowohl mit einem Seitenteil (7) des ersten, oberen Querträgers (3) als auch einem darunter liegenden Seitenteil (11) des zweiten, unteren Querträgers (13), insbesondere über jeweils eine Crashbox (21), verbunden ist.

## Claims

1. Method for producing a bumper assembly (1) for a vehicle, with the steps of:
- producing a cross member (3) from fibre-reinforced plastic,
- producing two side parts (7) by using hot, liquid plastic,
- forming a fused connection (15) respectively between a side part (7) and one of the two ends (5) of the cross member (3) during the cooling down of the hot melt of the respective side part (7).

2. Method according to Claim 1,
**characterized in that** the side parts (7) are injection-moulded by using hot, liquid plastic and a hot, liquid side part (7) is respectively arranged at one end (5) of the cross member (3), in order to form the fused connection (15) between the side part (7) and the cross member (3) during the cooling down of the respective side part (7).

3. Method according to Claim 2,
**characterized in that**
a crash box (21), produced in particular from a glass-fibre-reinforced plastic, is joined onto each hot, liquid side part (7), in order to form a fused connection (15) between the side part (7) and the crash box (21) during the cooling down of the side part (7).

4. Method according to Claim 3,
**characterized in that**
a fastening part (9), in particular in plate form and/or of metal, for fastening the bumper assembly (1) to a body structure of the vehicle is adhesively attached to the crash box (21).

5. Modular bumper assembly for a vehicle, comprising a cross member (3) of fibre-reinforced plastic, two side parts (7) of plastic, wherein a side part (7) is respectively arranged at each of the two ends (5) of the cross member (3), and two fastening parts (9) for fastening the bumper assembly (1) to a body structure of the vehicle, wherein a fastening part (9) is respectively fastened or can be fastened to a side part (7), **characterized in that**
a fused connection (15) is formed between the cross member (3) and each side part (7) and has the effect that the cross member (3) and the respective side part (7) are inseparably connected to one another, wherein the fused connection has been formed during the cooling down of the hot melt of the side part (7) in the production of the side part (7) by means of an injection-moulding process.

6. Bumper assembly according to Claim 5,
**characterized in that** the cross member (3) consists of carbon-fibre-reinforced plastic and/or material comprising fibre mat, in particular of glass-mat-reinforced thermoplastic or of continuous-fibre-reinforced plastic, preferably of continuous-fibre-reinforced thermoplastic sheets, such as for instance organometallic sheet or PP-GM40, and/or **in that** the cross member (3) has a U-shaped cross section or a top-hat profile.

7. Bumper assembly according to Claim 5 or 6,
**characterized in that**
the length of the cross member (3) is chosen such that, in the fitted position of the bumper assembly (1) on the vehicle and after arrangement of the side parts (7) at the ends (5) of the cross member (3), the cross member (3) and the two side parts (7) extend over the width of the vehicle in such a way that the bumper assembly (1) can be fastened to longitudinal members of the body structure by means of the fastening parts (9).

8. Bumper assembly according to at least one of Claims 5 to 7, **characterized in that**
the cross member (3, 3a, 3b) is formed as an arc, the curvature of which is chosen so as to correspond in particular to the contour of an inner surface of the outer skin of the vehicle in such a way that, in the fitted position of the bumper assembly (1), the cross member (3, 3a, 3b) runs at a predetermined distance from the outer skin of the vehicle.

9. Bumper assembly according to at least one of Claims 5 to 8, **characterized**
**in that** the side parts (7) are injection-moulded, and/or
**in that** the side parts (7) are formed from a material comprising polypropylene, for example from PP-GF, in particular from a material comprising polypropylene and a glass fibre fraction of at least 25%, preferably at least 30%.

10. Bumper assembly according to at least one of Claims 5 to 9,
**characterized in that**
a crash box (21) is arranged or can be arranged respectively between a side part (7) and a fastening part (9), wherein the side part (7), the crash box (21) and the fastening part (9) are preferably arranged one behind the other as seen in the fitted position and in the longitudinal direction of the vehicle, and **in that**, also preferably, the length of the crash box (21) is chosen with respect to the longitudinal direction of the vehicle in such a way that, in the fitted position, the cross member (3) assumes a predetermined distance from the outer skin of the vehicle.

11. Bumper assembly according to Claim 10,
**characterized in that**
each crash box (21) is of a fibre-reinforced plastic, in particular of carbon-fibre-reinforced plastic and/or of material comprising fibre mat, preferably of glass-mat-reinforced thermoplastic and/or continuous-fibre-reinforced thermoplastic sheets, such as for instance organometallic sheet.

12. Bumper assembly according to Claim 10 or 11,
**characterized in that**
each side part (7) is inseparably connected to the crash box (21) arranged on it, in particular by a fused connection (15) that is obtained during the cooling down of the hot melt of the injection-moulded side part (7) forming between the crash box (21) and the side part (7).

13. Bumper assembly according to at least one of Claims 5 to 12,
**characterized in that**
each fastening part (9) is formed as a plate and/or in that each fastening part (9) consists of a metal, in particular of aluminium or steel, and/or in that each fastening part (9) has bores, in order to fasten the fastening part (9) to the body structure, in particular to a longitudinal member of the body structure, by means of fastening means, such as for instance screws or rivets, and/or
**in that**, as seen in the fitted position of the bumper assembly (1) and in the longitudinal direction of the vehicle, each fastening part (9) is arranged behind the respective side part (7) and, if applicable, behind a crash box (21) arranged between the side part (7) and the fastening part (9).

14. Bumper assembly according to at least one of Claims 5 to 13,
**characterized in that** each fastening part (9) is adhesively attached to the respective side part (7) or to a crash box (21) arranged between the fastening part (9) and the side part (7).

15. Bumper assembly according to at least one of Claims 5 to 14,
**characterized in that**
a connection device for a towing lug, in particular in the form of a screw thread, is formed on the cross member (3).

16. Bumper assembly according to at least one of Claims 5 to 15,
**characterized in that**
the bumper assembly (1) has a further, second cross member (13), which in the fitted position is arranged underneath and at a distance from the first cross member (3), wherein a side part (11) is respectively arranged at the two ends of the second cross member (13), wherein each fastening part (9) is formed as an elongated plate, which in the fitted position extends in the vertical direction and which is connected both to a side part (7) of the first, upper cross member (3) and to a side part (11) lying thereunder of the second, lower cross member (13), in particular respectively by way of a crash box (21).

## Revendications

1. Procédé de fabrication d'un agencement de pare-chocs (1) pour un véhicule automobile, comprenant les étapes suivantes :
- production d'une traverse (3) en matière plastique renforcée par des fibres,
- production de deux parties latérales (7) en utilisant une matière plastique chaude et fluide,
- réalisation d'un assemblage par fusion (15) entre à chaque fois une partie latérale (7) et l'une des deux extrémités (5) de la traverse (3) pendant le refroidissement de la matière en fusion chaude de la partie latérale respective (7).

2. Procédé selon la revendication 1,
**caractérisé en ce que**
les parties latérales (7) sont moulées par injection en utilisant une matière plastique chaude et fluide et dans chaque cas une partie latérale chaude et fluide (7) est disposée à une extrémité (5) de la traverse (3) afin de réaliser,
pendant le refroidissement de la partie latérale respective (7), l'assemblage par fusion (15) entre la partie latérale (7) et la traverse (3).

3. Procédé selon la revendication 2,
**caractérisé en ce**
**qu'**une crashbox (21) notamment fabriquée en matière plastique renforcée par des fibres de verre est jointe à chaque partie latérale chaude et fluide (7), afin de réaliser, pendant le refroidissement de la partie latérale (7), un assemblage par fusion (15) entre la partie latérale (7) et la crashbox (21).

4. Procédé selon la revendication 3,
**caractérisé en ce**
**qu'**une partie de fixation (9), notamment en forme de plaque et/ou métallique, pour la fixation de l'agencement de pare-chocs (1) à une structure de carrosserie du véhicule automobile, est collée à la crashbox (21).

5. Agencement de pare-chocs modulaire pour un véhicule automobile, comprenant une traverse (3) en matière plastique renforcée par des fibres, deux parties latérales (7) en matière plastique, une partie latérale (7) étant à chaque fois disposée à chacune des deux extrémités (5) de la traverse (3), et deux parties de fixation (9) pour la fixation de l'agencement de pare-chocs (1) à une structure de carrosserie du véhicule automobile, une partie de fixation (9) étant à chaque fois fixée ou pouvant être fixée à une partie latérale (7), **caractérisé en ce qu'**entre la traverse (3) et chaque partie latérale (7) est réalisé un assemblage par fusion (15), par le biais duquel la traverse (3) et la partie latérale respective (7) sont connectées l'une à l'autre de manière inamovible, l'assemblage par fusion ayant été réalisé lors de la fabrication de la partie latérale (7) au moyen d'un procédé de moulage par injection pendant le refroidissement de la matière en fusion chaude de la partie latérale (7).

6. Agencement de pare-chocs selon la revendication 5,
**caractérisé en ce que**
la traverse (3) se compose de matière plastique renforcée par des fibres de carbone et/ou de matériau présentant un mat de fibres, en particulier de matière thermoplastique renforcée par un mat de verre ou de matière plastique renforcée par des fibres sans fin, de préférence de plaques de matière thermoplastique renforcée par des fibres sans fin, comme par exemple de la tôle organique ou du PP-GM40, et/ou **en ce que** la traverse (3) présente une section transversale en forme de U ou un profil en chapeau.

7. Agencement de pare-chocs selon la revendication 5 ou 6,
**caractérisé en ce que**
la longueur de la traverse (3) est choisie de telle sorte que dans la position d'installation de l'agencement de pare-chocs (1) sur le véhicule automobile et après l'agencement des parties latérales (7) aux extrémités (5) de la traverse (3), la traverse (3) et les deux parties latérales (7) s'étendent sur la largeur du véhicule automobile de telle sorte que l'agencement de pare-chocs (1) puisse être fixé au moyen des parties de fixation (9) à des longerons de la structure de carrosserie.

8. Agencement de pare-chocs selon au moins l'une quelconque des revendications 5 à 7,
**caractérisé en ce que**
la traverse (3, 3a, 3b) est réalisée en forme d'arc dont la courbure est choisie de telle sorte, en particulier en fonction du contour d'une surface intérieure de l'habillage extérieur du véhicule automobile, que la traverse (3, 3a, 3b), dans la position d'installation de l'agencement de pare-chocs (1), s'étende à une distance prédéfinie de l'habillage extérieur du véhicule automobile.

9. Agencement de pare-chocs selon au moins l'une quelconque des revendications 5 à 8,
**caractérisé en ce que**
les parties latérales (7) sont moulées par injection, et/ou
**en ce que** les parties latérales (7) sont réalisées en un matériau présentant du polypropylène, par exemple en PP-GF, en particulier en un matériau qui présente du polypropylène et une proportion de fibres de verre d'au moins 25 %, de préférence d'au moins 30 %.

10. Agencement de pare-chocs selon au moins l'une quelconque des revendications 5 à 9,
**caractérisé en ce**
**qu'**une crashbox (21) est disposée ou peut être disposée entre à chaque fois une partie latérale (7) et une partie de fixation (9), la partie latérale (7), la crashbox (21) et la partie de fixation (9) étant de préférence disposées les unes derrière les autres dans la position d'installation et vu dans la direction longitudinale du véhicule automobile et, en ce qu'en outre de préférence, la longueur de la crashbox (21) par rapport à la direction longitudinale du véhicule automobile est choisie de telle sorte que la traverse (3), dans la position d'installation, soit disposée à une distance prédéfinie de l'habillage extérieur du véhicule automobile.

11. Agencement de pare-chocs selon la revendication 10,
**caractérisé en ce que**
chaque crashbox (21) se compose d'une matière plastique renforcée par des fibres, en particulier de matière plastique renforcée par des fibres de carbone et/ou de matériau présentant un mat de fibres, de préférence d'une matière thermoplastique renforcée par un mat de verre et/ou de plaques de matière thermoplastique renforcées par des fibres sans fin, comme par exemple de la tôle organique.

12. Agencement de pare-chocs selon la revendication 10 ou 11,
**caractérisé en ce que**
chaque partie latérale (7) est connectée de manière inamovible à la crashbox (21) disposée sur celle-ci, notamment **en ce qu'**entre la crashbox (21) et la partie latérale (7) est réalisé un assemblage par fusion (15) obtenu lors du refroidissement de la matière en fusion chaude de la partie latérale moulée par injection (7).

13. Agencement de pare-chocs selon au moins l'une quelconque des revendications 5 à 12,
**caractérisé en ce que**
chaque partie de fixation (9) est réalisée sous forme de plaque et/ou
**en ce que** chaque partie de fixation (9) se compose d'un métal, en particulier d'aluminium ou d'acier,
et/ou
**en ce que** chaque partie de fixation (9) présente des perçages afin de fixer la partie de fixation (9) au moyen de moyens de fixation tels que des vis ou des rivets à la structure de carrosserie,
en particulier à un longeron de la structure de carrosserie, et/ou
**en ce que** chaque partie de fixation (9), dans la position d'installation de l'agencement de pare-chocs (1) et vu dans la direction longitudinale du véhicule automobile, est disposée derrière la partie latérale respective (7), et éventuellement derrière une crashbox (21) disposée entre la partie latérale (7) et la partie de fixation (9).

14. Agencement de pare-chocs selon au moins l'une quelconque des revendications 5 à 13,
**caractérisé en ce que**
chaque partie de fixation (9) est collée à la partie latérale respective (7) ou à une crashbox (21) disposée entre la partie de fixation (9) et la partie latérale (7).

15. Agencement de pare-chocs selon au moins l'une quelconque des revendications 5 à 14,
**caractérisé en ce**
**qu'**un dispositif de raccordement pour un oeillet d'attelage est réalisé sur la traverse (3), en particulier sous la forme d'un filet de vis.

16. Agencement de pare-chocs selon au moins l'une quelconque des revendications 5 à 15,
**caractérisé en ce que**
l'agencement de pare-chocs (1) présente une deuxième traverse supplémentaire (13) qui est disposée dans la position d'installation en dessous de la première traverse (3) et à l'écart de celle-ci, une partie latérale (11) étant à chaque fois disposée au niveau des deux extrémités de la deuxième traverse (13), chaque partie de fixation (9) étant réalisée sous la forme d'une plaque allongée qui s'étend dans la position d'installation dans la direction verticale et qui est connectée à la fois à une partie latérale (7) de la première traverse supérieure (3) et à une partie latérale située en dessous (11) de la deuxième traverse inférieure (13), en particulier par le biais d'une crashbox (21) respective.
